# EUROPEAN PATENT SPECIFICATION

(11) **EP 1 179 279 B1**
(45) Date of publication and mention of the grant of the patent: **16.07.2003**
(21) Application number: 00930830.5
(22) Date of filing: 19.05.2000
(51) Int. Cl.: H04Q 7/38

(54) **PRIORITIZATION AND FLOW CONTROL OF DATA PACKETS FOR A SPREAD SPECTRUM MULTIUSER CHANNEL**
PRIORISIERUNG UND FLUSSSTEUERUNG VON DATENPAKETEN FÜR EINEN SPREIZSPEKTRUMMEHRBENUTZERKANAL
ETABLISSEMENT DES PRIORITES ET REGULATION DE FLUX DANS UN CANAL MULTI-UTILISATEURS A SPECTRE ETALE

(30) Priority: 20.05.1999 US 135073 P
(43) Date of publication of application: 13.02.2002
(60) Divisional application: 02006637.9
(73) Proprietor: INTERDIGITAL TECHNOLOGY CORPORATION, Wilmington, DE 19801 (US)
(72) Inventor: TERRY, Stephen, E., North Point, NY 11768 (US)
(74) Representative: Henningsson, Gunnar
(86) International application number: US0013918
(87) International publication number: WO00072608

(56) References cited:
- EP-A- 0 912 015
- WO-A-96/08935
- WO-A-98/47253
- WO-A-99/09775
- US-A- 5 317 562
- US-A- 5 802 310
- YANG C -Q ET AL: "A TAXONOMY FOR CONGESTION CONTROL ALGORITHMS IN PACKET SWITCHING NETWORKS" IEEE NETWORK,IEEE INC. NEW YORK,US, vol. 9, no. 4, 1 July 1995 (1995-07-01), pages 34-45, XP000526590 ISSN: 0890-8044

## Description

### BACKGROUND

The invention generally relates to channels used by multiple users in a wireless code division multiple access spread spectrum system. More specifically, the invention relates to a system and method of prioritizing and controlling the flow of data for common and shared channels in a spread spectrum system.

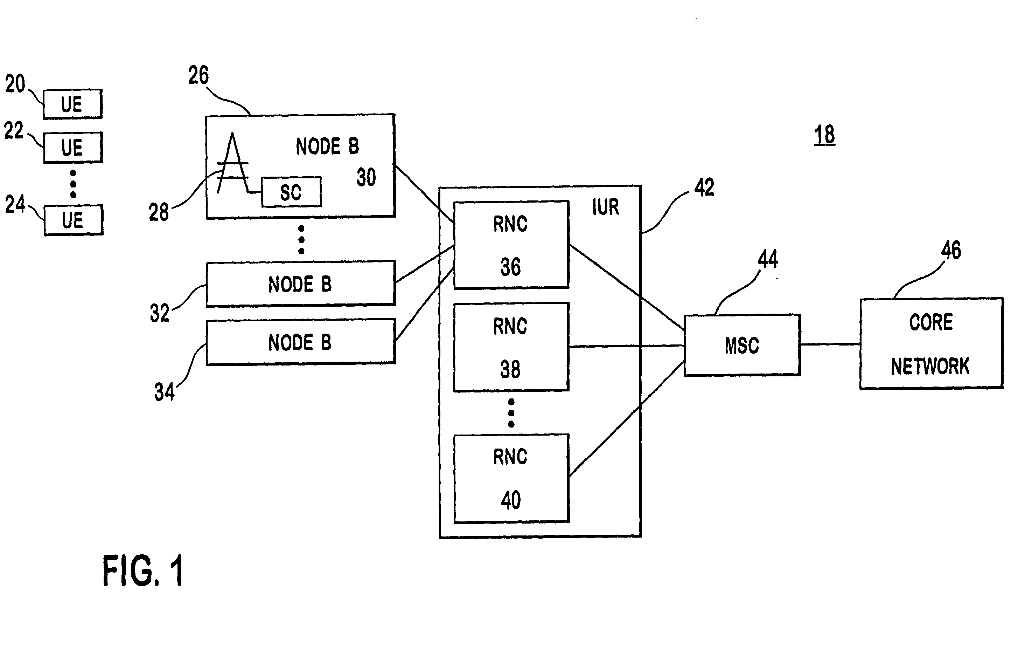

**Figure 1** illustrates a simplified wireless spread spectrum code division multiple access (CDMA) communication system **18.** A node b **26** within the system **18** communicates with associated user equipment **20-24** (UE). The node b **26** has a single site controller (SC) **30** associated with either a single (shown in **Figure 1)** or multiple base stations **28.** A Group of node bs **26, 32, 34** is connected to a radio network controller (RNC) **36.** To transfer communications between RNCs **36-40,** an interface between the RNCs (IUR) **42** is utilized. Each RNC **36-40** is connected to a mobile switching center (MSC) **44** which in turn is connected to the core network **46.**

To communicate within the system **18,** many types of communication channels are used, such as dedicated, shared and common. Dedicated channels transfer data between a node b **26** and a particular UE **20-24.** Common and shared channels are used by multiple UEs **20-24** or users. All of these channels carry a variety of data including traffic, control and signaling data.

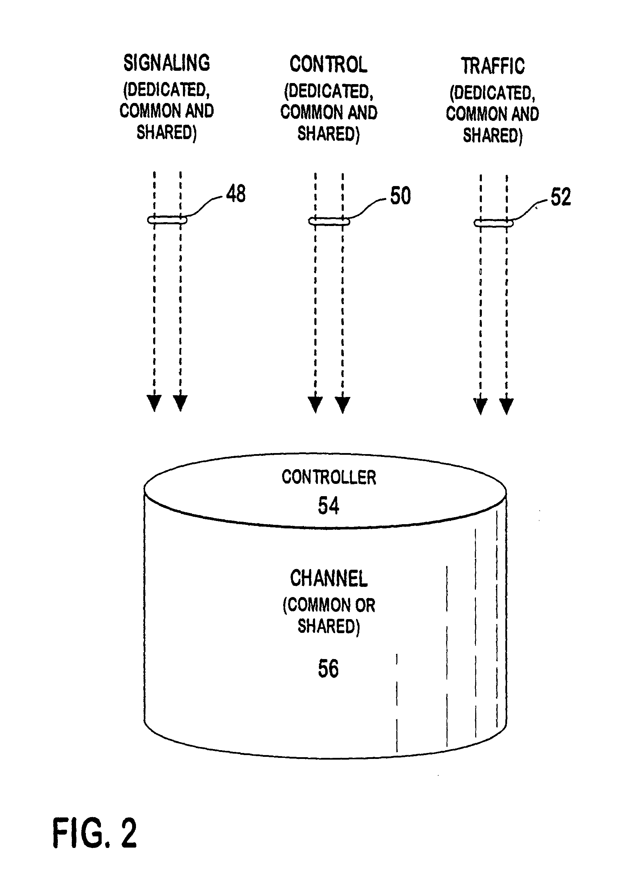

Since shared and common channels carry data for different users, data is sent using protocol data units (PDUs) or packets. As shown in **Figure 2,** to regulate the flow of data from differing sources **48-52** into a channel **56,** a controller **54** is used.

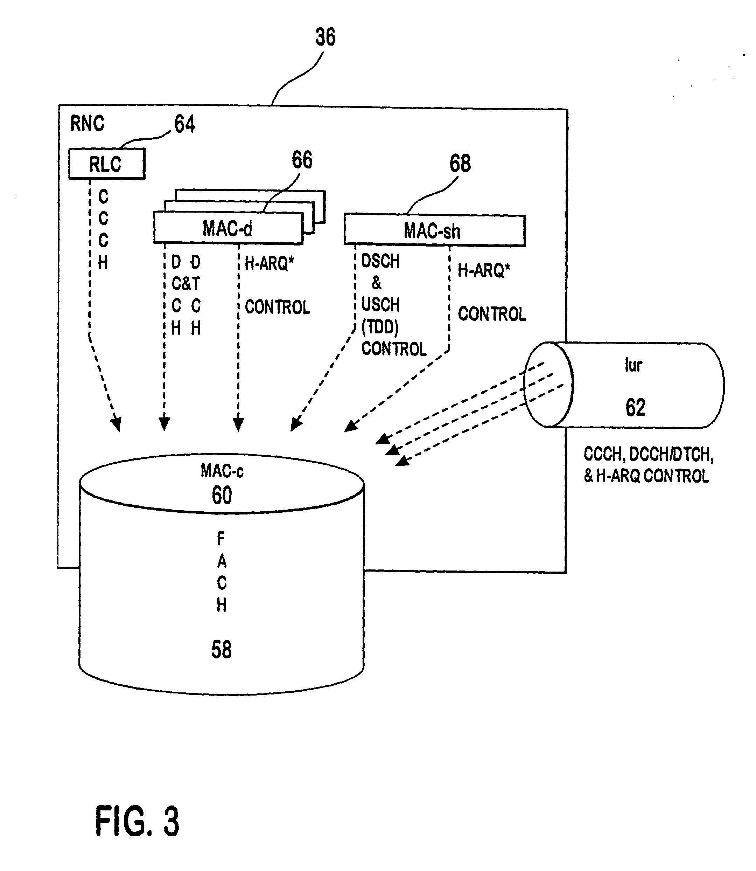

One common channel used for transmitting data to the UEs **20-24** is the forward access common channel (FACH) **58.** As shown in **Figure 3,** the FACH **58** originates in a RNC **36** and is sent to a node b **28-34** for wireless transmission as a spread spectrum signal to the UEs **20-24.** The FACH **58** carriers several data types from various sources, such as a common control channel (CCCH), dedicated control and traffic channel (DCCH and DTCH), and a downlink and uplink share channel (DSCH and USCH) control signaling. The FACH **58** also carries control signaling out of band, such as hybrid automatic repeat request (H-ARQ), and similar data transmitted via the IUR **62** from other RNCs **38-40,** such as CCCH, DCCH, DTCH and H-ARQ control data.

Various controllers are used by the RNC **36** to control the flow of data. A radio link controller (RLC) **64** handles the CCCH. The dedicated medium access controller (MAC-d) **66** handles the DCCH, the DTCH and some out of band H-ARQ signaling. The shared medium access controller (MAC-sh) **68** handles the DSCH, USCH control signaling and out of band H-ARQ control signaling. Controlling the FACH **58** is the common medium access controller (MAC-c) **60.**

Due to the multiple sources of data **48-52** that can be transmitted over a common or shared channel, the channel controllers **54** queue the data prior to transmission. If a large backlog develops in the queue, data in the queue develops a latency. A large latency of certain data such as control data will result in the failure of a channel. To alleviate this problem, the prior art either flushed the queue to reduce congestion or rerouted the data. Flushing the queue results in the loss of data and requires retransmission which is undesirable. Rerouting data already queued creates a duplication of data within the system and does not resolve the existing congestion.

WO 96/08935 discloses a prioritization scheme for a GSM system. Different types of packets are given a priority for transmission over a common channel. The data packets are sent over the common channel based on their priority.

U.S. Patent No. 5,802,310 discloses a system for data queue control in a communications network. Data is transferred to a queue for a channel. The queue is disabled when the amount of queued data is greater than the first limit and the queue is enabled when the amount of queued data is less than a second threshold. According, it is desirable to reduce the latency of data for shared and common channels without the problems associated with the prior art.

### SUMMARY

According to the invention, a method, system and controller are provided as defined in the appended claims.

Packet data from a plurality of sources is received at a controller associated with the multiuser channel. Each packet of the packet data is prioritized based on in part the reroutability of a class of data types. Each packet is scheduled for transmission over the multiuser channel based on in part the prioritization.

### BRIEF DESCRIPTION OF THE DRAWINGS

**Figure 1** is a simplified illustration of a wireless spread spectrum communication system.
**Figure 2** is an illustration of data flowing into a common or shared channel.
**Figure 3** is an illustration of data flowing into a FACH channel within a RNC.
**Figure 4** is an illustration of a prioritization scheme.
**Figure 5** is a prioritization scheme for use with a FACH channel.
**Figure 6** depicts a reservation mechanism used with a common or shared channel.
**Figure 7** depicts data source windows used with a common or shared channel.

### DETAILED DESCRIPTION OF THE PREFERRED EMBODIMENTS

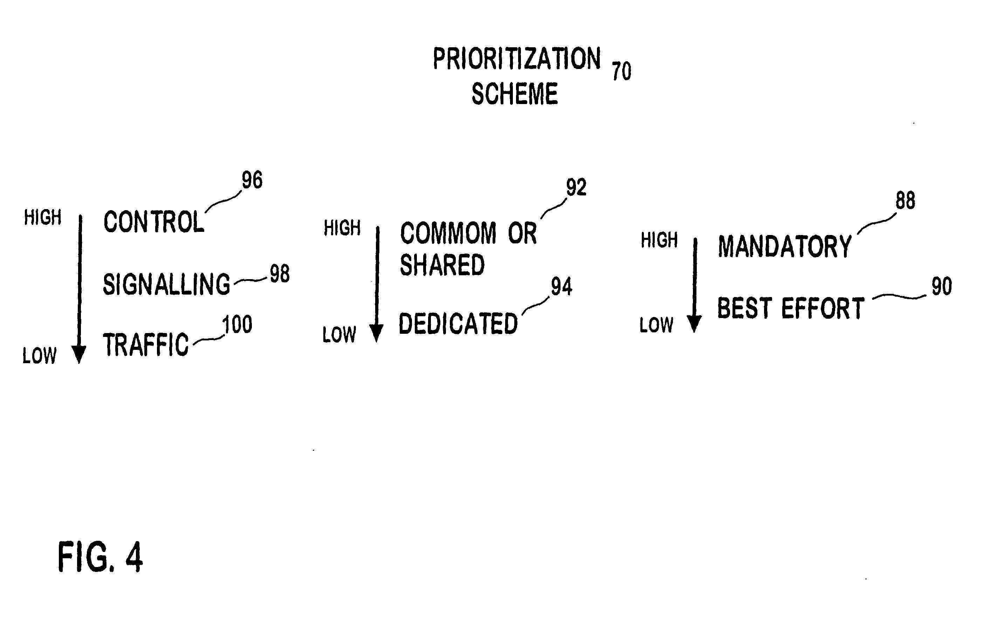

Data prioritization **70** is used to reduce data latency in a multiuser channel controller **54** as illustrated in **Figure 4.** For a particular common or shared channel, certain data must be transmitted on that channel and is shown in the figure as "mandatory" **88.** Other data is preferably sent on the particular channel but may be rerouted to another channel, such as a dedicated channel. This data is referred to as "best effort" **90.** Since "mandatory" data **88** is not reroutable, it takes priority over "best effort" data **90.**

The type of the data within a packet, such as control **96,** signaling **98** and traffic data **100,** is also used for prioritization. To accomplish prioritization of the data type, control **96** and signaling **98** data packets are separated from traffic data packets **100.** One approach to separating the packets is to group similar data type packets together prior to reception at the controller **54.** Alternately, packets sent by each channel prior to reception by the controller **54** are provided with a flag or identifier indicating the packets' data type.

Since a prolonged delay in the transfer of control **96** or signaling **98** data results in a frozen channel, control **96** and signaling **98** data are given a higher priority than traffic data **100.** Additionally, data associated with multiple users, common or shared **92,** has a higher priority than data for a single user, dedicated **94.** The data prioritization scheme is typically stored in the software of the multiuser channel's controller.

During periods of high congestion, data is rerouted to other channels based on its priority **70.** For instance, best effort dedicated traffic data is rerouted and mandatory common control data is not. By rerouting data prior to queuing, retransmissions will not be required. Accordingly, the amount of queued data is reduced resulting in lower data latency. Additionally, since the rerouted data is never queued, the duplication of data as experienced in the prior art is eliminated.

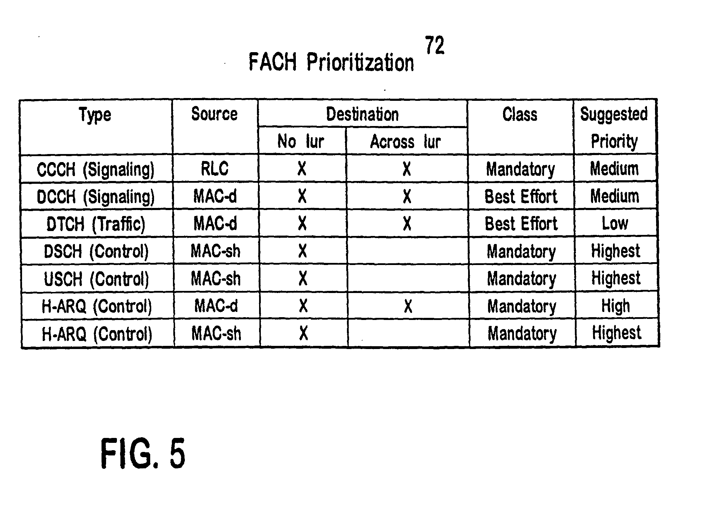

A prioritization scheme **72** for use with a FACH **58** is shown in **Figure 5.** Since the DSCH, H-ARQ of the MAC-sh have mandatory shared control data, they have the highest priority, highest. Although the H-ARQ of the MAC-d has mandatory control data, being dedicated it is assigned a slightly lower priority, high. The CCCH and DCCH are used for signaling and have the next level of priority, medium. The lowest level of priority is assigned to the DTCH because it has best effort dedicated traffic data.

To facilitate this prioritization scheme **72** for the FACH **58,** modifications to the RNC **36** are required. As shown in **Figure 3,** the prior art MAC-d **66** controls the DCCH, DTCH and MAC-d's H-ARQ. As shown in **Figure 5,** each of these sources has a different priority. Since this data is multiplexed prior to prioritization at the MAC-d **66,** the multiplexer of the MAC-d **66** is moved to the MAC-c **60** to allow prioritization at the MAC-c **60.** Alternatively, the MAC-d **66** may send the priority and class (mandatory or best effort), such as by a flag or identifier, of each packet of the multiplexed data for prioritization at the MAC-c **60.** The data controlled by the RLC **64** and the MAC-sh **68** have equal priority and accordingly, neither requires modification. Using the stored priority list, the data from the various sources is scheduled for transmission and rerouted during periods of high congestion.

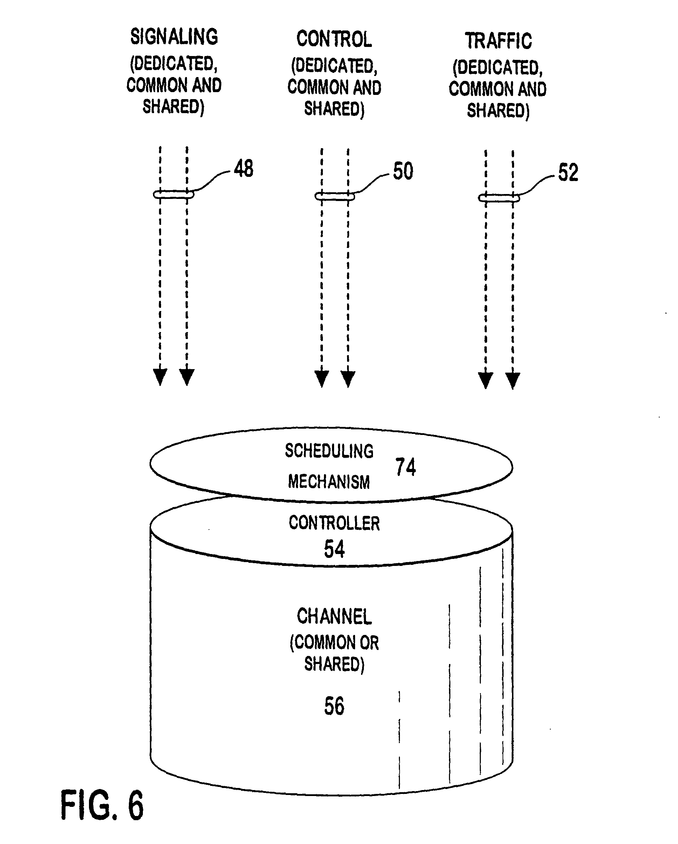

Another technique for reducing the latency of data which may be combined with prioritization is to control the flow of data between the various controllers. As shown in **Figure 6,** a scheduling mechanism **74** is used to regulate the data entering the common or shared channel **56.** The scheduling mechanism **74** tracks the backlog of data in the controller's queue. If the mechanism **74** recognizes congestion and that the data will not be transmitted in a certain period of time, access to the channel **56** limits the flow of data from the individual data sources. The individual sources will recognize the need to reroute data or to not attempt transmission. Using a flow control mechanism with a FACH, MAC and RLC (Layer 2), the latency of signaling is decreased thus increasing efficiency.

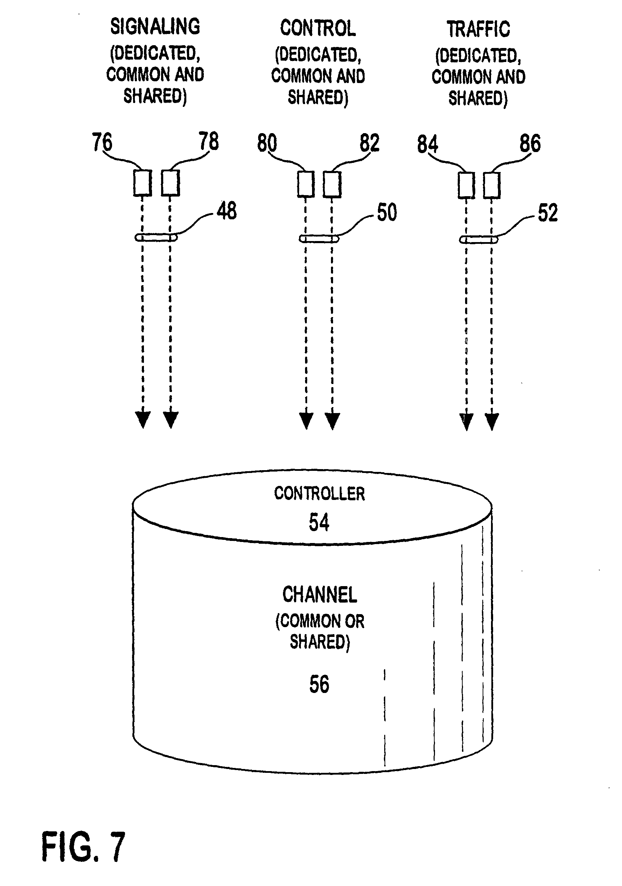

To prevent the monopolization of the common or shared channel **56** by one data source **48-52** variable windows **76-86** may be used as shown in **Figure 7.** Each data source **48-52** has a window or multiple windows **76-86** of outstanding data in the queue that it is permitted. The size of the window **76** is based on the requirements of the specific source. The window **76** is dynamically adjusted in response to the availability of the queue. As the availability of the channel increases, the size of the windows increases which increases the number of outstanding packets. Conversely, as the availability decreases, the size of the windows decreases which decreases the number of outstanding packets. As a result of the decreased windows, the data sources either reroute or stop sending packets to the windows.

## Claims

1. A method of prioritizing packet data for transfer over a multiuser channel (56) in a wireless spread spectrum code division multiple access communication system, a controller (54) associated with the multiuser channel (56) receives packet data from a plurality of sources (48, 50, 52) prioritizing each packet of said packet data, and
scheduling each said packet for transmission over the multiuser channel (56) based on in part said prioritization (70), the method **characterized by**:
said prioritizing (70) each packet of said packet data being based on in part reroutability of a class of data types of each said packet where the classes having a least reroutable types of packet take priority over classes with more reroutable types of packet.

2. The method of claim 1 further **characterized by** said prioritization (70) is based on in part a hierarchy of control (96), signaling (98) and traffic (100) type packets.

3. The method of claim 2 further **characterized by** the control (96) packets take priority over the signaling (98) packets which take priority over the traffic (100) packets.

4. The method of claim 1 further **characterized by** the prioritization (70) is based on in part a hierarchy of common, shared (92) and dedicated (94) type packets.

5. The method of claim 4 further **characterized by** the common and shared (92) packets take priority over the dedicated (94) packets.

6. The method of claim 1 further **characterized by** the classes of packet data comprise a control class (96) with no reroutability, a signaling class (98) with some reroutability and a traffic class (100) with all reroutability.

7. The method of claim 6 further **characterized by** each class (96, 98, 100) having a subhierarchy based on a number of users associated with the packet.

8. The method of claim 7 further **characterized by** the subhierarchy comprises common and shared packets (92) having priority over dedicated packets (94).

9. The method of claim 1 wherein the multiuser channel (56) is a shared channel.

10. The method of claim 1 wherein the multiuser channel (56) is a common channel.

11. The method of claim 10 wherein the common channel is a forward access control channel (58).

12. The method of claim 11 further **characterized by** the packets are prioritized (72) into a highest, high medium or lowest priority; wherein the highest priority having downlink shared channel control, uplink shared channel control and shared hybrid automatic repeat request control packets, the high priority having dedicated hybrid automatic repeat request control packets, the medium priority having common control channel and dedicated control channel packets and the lowest priority having dedicated traffic channel packets.

13. A wireless spread spectrum communication system having a radio network controller (36, 38, 40) controlling the communication of a plurality of communication nodes (30, 32, 34) where each node (30, 32, 34) supports communication for a plurality of user equipments (20, 22, 24), the system comprising: the plurality of communication nodes (30, 32, 34); the plurality of user equipments (20, 22, 24) having: means (20, 22, 24) for receiving packet data transferred over a multiuser channel; and the radio network controller (36, 38, 40) having: a controller (54) associated with the multiuser channel having an input configured to receive packet data from the plurality of communication nodes; the radio network controller (36, 38, 40) further having:
means for prioritizing (70) each packet of said packet data; and
means for scheduling (74) each said packet for transmission over the multiuser channel (56) based on in part said prioritization (70), the system being **characterized by** said prioritizing being based on in part reroutability of a class of data types of each said packet where the classes having a least reroutable types of packet take priority over classes with more reroutable types of packet.

14. A controller (54) for prioritizing packet data for transfer over a multiuser channel in a wireless spread spectrum code division multiple access communication system, the controller (54) comprising: an input configured to receive packet data from a plurality of sources; and an output selectively outputting the received packet data for transmission over the multiuser channel based on in part a prioritization scheme (70); the controller (54) **characterized by**:
the prioritization scheme (70) prioritizes each packet of the packet data based on in part reroutability of a class of data types of each said packet where the classes having a least reroutable types of packet take priority over classes with more reroutable types of packet.

## Patentansprüche

1. Verfahren zum Priorisieren von Paketdaten zum Übertragen über einen Mehrbenutzerkanal (58) in einem Funk-Spread-Spectrum-Codemultiplex-Vielfachzugriff-Kommunikationssystem, wobei ein Controller (54), der mit dem Mehrbenutzerkanal (56) verbunden ist, Paketdaten von einer Vielzahl von Quellen (48, 50, 52) empfängt und jedes Paket der Paketdaten priorisiert, und jedes der Pakete zum Senden über den Mehrbenutzerkanal (56) teilweise auf Basis der Priorisierung (70) auflistet, wobei das Verfahren **dadurch gekennzeichnet ist, dass**:
das Priorisieren (70) jedes Pakstes der Paketdaten auf der teilweisen Umleitbarkeit einer Klasse von Datentypen jedes Paketes beruht, wobei die Klassen mit wenigstens umleitbaren Typen von Paketen Priorität gegenüber Klassen mit mehr umleitbaren Typen von Pakten haben.

2. Verfahren nach Anspruch 1, des Weiteren **dadurch gekennzeichnet, dass** die Priorisierung (70) teilweise auf einer Hierarchie von Steuerpaketen (96), Signalisierungspaketen (98) und Verkehrspaketen (100) beruht.

3. Verfahren nach Anspruch 2, des Weiteren **dadurch gekennzeichnet, dass** die Steuarpakete (96) Priorität gegenüber den Signallsierungspaketen (96) haben, die Priorität gegenüber den Verkehrspaketen (100) haben.

4. Verfahren nach Anspruch 1, des Weiteren **dadurch gekennzeichnet, dass** die Priorisierung (70) teilweise auf einer Hierarchie gemeinschaftlicher (common), geteilter (shared) Pakete (92) und zugewiesener (dedicated) Pakete (94) beruht.

5. Vorfahren nach Anspruch 4, des Weiteren **dadurch gekennzeichnet, dass** die gemeinschaftlichen und die geteliten Pakete (92) Priorität gegenüber den zugewiesenen Paketen (94) haben.

6. Verfahren nach Anspruch 1, des Weiteren **dadurch gekennzeichnet, dass** die Klassen von Paketdaten eine Steuer-Klasse (96) ohne Umleitbarkeit, eine Signalisierungs-Klasse (98) mit einer bestimmten Umleitbarkeit und eine Verkehrs-Klasse (100) mit vollständlger Umleitbarkeit umfassen.

7. Verfahren nach Anspruch 6, des Weiteren **dadurch gekennzeichnet, dass** jede Klasse (96, 98, 100) eine Unterhierarchie hat, die auf einer Anzahl von Benutzem beruht, die mit dem Paket verbunden sind.

8. Verfahren nach Anspruch 7, des Weiteren **dadurch gekennzeichnet, dass** die Unterhierarchie gemeinschaftliche und geteilte Pakete (92) umfasst, die Priorität gegenüber zugewiesenen Paketen (94) haben.

9. Verfahren nach Anspruch 1, wobei der Mehrbenutzerkanal (56) ein geteilter Kanal ist.

10. Verfahren nach Anspruch 1, wobei der Mehrbenutzerkanal (56) ein gemeinschaftlicher Kanal ist.

11. Verfahren nach Anspruch 10, wobei der gemeinschaftliche Kanal ein Forward-Access-Steuerkanal (58) ist.

12. Verfahren nach Anspruch 11, des Wetteren **dadurch gekennzeichnet, dass** die Pakete nach höchster, hoher, mittlerer oder niedrigster Priorität priorislert (72) werden, wobei die höchste Priorität Downlink-Tellungs-Kanalsteuer-, Uplink-Tellungs-Kanalsteuer- und Teilhybrid-ARQ-Steuerpakete aufweist, die hohe Priorität Zuweisungs-Hybrid-ARQ-Steuerpakete aufweist, die mittlere Priorität Gemeinschafts-Steuerkanal- und Zuweisungs-Steuerkanal-Pakete aufweist und die niedrigste Priorität Zuweisungs-Verkehrskanal-Pakete aufweist.

13. Funk-Spread-Spectrum-Kommunikationssystem mit einem Radionetwork-Controller (36, 38, 40), der die Kommunikation einer Vielzahl von Kommunikationsknoten (30, 32, 34) steuert, wobei jeder Knoten (30, 32, 34) Kommunlkation für elne Vieizahl von Benutzergeräten (20, 22, 24) unterstützt und das system umfasst: die Vielzahl von Kommunikationsknoten (30, 32, 34); die Vielzahl von Benutzergsräten (20, 22, 24), die aufweisen: Einrichtungen (20, 22, 24) zum Empfangen von Paketdaten, die über einen Mehrbenutzerkanal übertragen werden; und den Radionetwork-Controller (36, 38, 40), der aufweist einen Controller (54), der mit dem Mehrbenutzerkanal verbunden ist und einen Eingang aufweist, der so konfiguriert ist, dass er Paketdaten von der Vielzahl von Kommunikationsknoten empfängt; wobei der Radionetwork-Controller (36, 38, 40) des Weiteren aufweist:
eine Einrichtung zum Priorisieren (70) jedes Paketes der Paketdaten; und
eine Einrichtung zum Auflisten (74) jedes der Pakete zum Senden über den Mehrbenutzerkanal (56) teilweise auf Basis der Priorisierung (70), wobei das System **dadurch gekennzeichnet ist, dass** das Priorisieren teilweise auf der Umleitbarkelt einer Klasse von Datentypen jedes der Pakete basiert, wobei die Klassen mit wenigstens umleitbaren Typen von Paketen, Priorität gegenüber Klassen mit mehr umleitbaren Typen von Paketan haben.

14. Controller (54) zum Priorisieren von Paketdaten zur Übertragung über einen Mehrbenutzerkanal in einem Funk-Spread-Spectrum-Codemultiplex-Vielfachzugriff-Kommunikationssystem, wobei der Controller (54) umfasst: einen Eingang, der so konfiguriert ist, dass er Paketdaten von einer Vielzahl von Quellen empfängt, und einen Ausgang, der selektiv die empfangenen Paketdaten zum Senden über den Mehrbenutzerkanal teilweise auf Basis einer Priorisierungsliste (70) ausgibt; wobei der Controller (54) **dadurch gekennzeichnet ist, dass**:
die Priorisierungsliste (70) jedes Paket der Paketdaten teilweise auf Basis der Umleitbarkelt einer Klasse von Datentypen jedes der Pakete priorisiert, wobei die Klassen mit wenigstens umleitbaren Typen von Paketen Prlorität gegenüber Klassen mit mehr umleitbaren Typen von Paketen haben.

## Revendications

1. Procédé d'affectation de priorité à des données de paquets pour transfert sur un canal multi-utilisateur (56) dans un système de communication sans fil à accès multiple par répartition en code à étalement de spectre, un contrôleur (54) associé au canal multi-utilisateur (56) reçoit des données de paquets d'une pluralité de sources (48, 50, 52), affectant une priorité à chaque paquet desdites données de paquets et programmant chacun desdits paquets pour transmission sur le canal multi-utilisateur (56) en fonction en partie de ladite affectation de priorité (70), le procédé étant **caractérisé par** :
ladite affectation de priorité (70) à chaque paquet desdites données de poquets étant basée en partie sur la capacité de réacheminement d'une classe de types de données de chacun desdits paquets où les classes qui ont des types de paquets moins réacheminables ont la priorité sur des classes qui ont des types de paquets plus réacheminables.

2. Procédé selon la revendication 1, **caractérisé en outre par le fait que** ladite affectation de priorité (70) est fonction en partie d'une hiérarchie de paquets de type de contrôle (96), de signalisation (98) et de trafic (100).

3. Procédé selon la revendication 2, **caractérisé en outre par le fait que** les paquets de contrôle (96) ont la priorité sur les paquets de signalisation (98) qui ont la priorité sur les paquets de trafic (100).

4. Procédé selon la revendication 1, **caractérisé en outre par le fait que** ladite affectation de priorité (70) est fonction en partie d'une hiérarchie de paquets de types communs, partagés (92) et dédiés (94).

5. Procédé selon la revendication 4, **caractérisé en outre par le fait que** les paquets communs et partagés (92) ont la priorité sur les paquets dédiés (94).

6. Procédé selon la revendication 1, **caractérisé en outre par le fait que** les classes de données de paquets comprennent une classe de contrôle (96) sans capacité de réacheminement, une classe de signalisation (98) avec une certaine capacité de réacheminement et une classe de trafic (100) avec une capacité de réacheminement totale.

7. Procédé selon la revendication 6, **caractérisé en outre par le fait que** chaque classe (96, 98, 100) a une sous-hiérarchie basée sur un nombre d'utilisateurs associés au paquet.

8. Procédé selon la revendication 7, **caractérisé en outre par le fait que** la sous-hiérarchie comprend des paquets communs et partagés (92) qui ont la priorité sur les paquets dédiés (94).

9. Procédé selon la revendication 1, dans lequel le canal multi-utilisateur (56) est un canal partagé.

10. Procédé selon la revendication 1, dans lequel le canal multi-utilisateur (56) est un canal commun.

11. Procédé selon la revendication 10, dans lequel le canal commun est un canal de contrôle à accès avant (58).

12. Procédé selon la revendication 11, **caractérisé en outre par le fait que** les paquets sont affectés d'une priorité (72) la plus élevée, élevée, moyenne ou la plus faible ; dans lequel la priorité la plus élevée a des paquets de contrôle de canal partagés de liaison descendante, de contrôle de canal partagés de liaison montante et de contrôle à demande de répétition automatique hybride partagés, la priorité élevée a des paquets de contrôle à demande de répétition automatique hybride dédiés, la priorité moyenne a des paquets de canal de contrôle communs et de canal de contrôle dédiés et la priorité la plus faible a des paquets de canal de trafic dédiés.

13. Système de communication sans fil par étalement de spectre comportant un contrôleur de réseau radio (36, 38, 40) contrôlant la communication d'une pluralité de noeuds de communication (30, 32, 34) où chaque noeud (30, 32, 34) prend en charge la communication pour une pluralité d'équipements d'utilisateur (20, 22, 24), le système comprenant : la pluralité de noeuds de communication (30, 32, 34) ; la pluralité d'équipements d'utilisateur (20, 22, 24) comportant : des moyens (20, 22, 24) pour recevoir des données de paquets transférées sur un canal multi-utilisateur ; et le contrôleur de réseau radio (36, 38, 40) comportant : un contrôleur (54) associé au canal multi-utilisateur ayant une entrée configurée pour recevoir des données de paquets de la pluralité de noeuds de communication ; le contrôleur de réseau radio (36, 38, 40) comportant en outre :
des moyens pour affecter une priorité (70) à chaque paquet desdites données de paquets, et
des moyens pour programmer (74) chacun desdits paquets pour transmission sur le canal multi-utilisateur (56) en fonction en partie de ladite affectation de priorité (70), le système étant **caractérisé par le fait que** ladite affectation de priorité est basée en partie sur la capacité de réacheminement d'une classe de types de données de chacun desdits paquets où les classes ayant des types de paquets moins réacheminables ont la priorité sur les classes ayant des types de paquets plus réacheminables.

14. Contrôleur (54) pour affecter une priorité à des données de paquets pour transfert sur un canal multi-utilisateur dans un système de communication sans fil à accès multiple par répartition en code à étalement de spectre, le contrôleur (54) comprenant : une entrée configurée pour recevoir des données de paquets d'une pluralité de sources ; et une sortie délivrant de manière sélective les données de paquets reçues pour transmission sur le canal multi-utilisateur en fonction en partie d'une méthode d'affectation de priorité (70) ; le contrôleur (54) étant **caractérisé en ce que** :
la méthode d'affectation de priorité (70) affecte une priorité à chaque paquet des données de paquets en fonction en partie de la capacité de réacheminement d'une classe de types de données de chacun desdits paquets où les classes ayant des types de paquets moins réacheminables ont la priorité sur les classes ayant des types de paquets plus réacheminables.
